# EUROPEAN PATENT APPLICATION

(11) **EP 1 911 627 A1**
(43) Date of publication of application: **16.04.2008**
(21) Application number: 06425689.4
(22) Date of filing: 09.10.2006
(51) Int. Cl.: B60R 9/045, B60R 9/055

(54) **Semirigid carrier rack for vehicle roof**

(71) Applicant: Aurilis Group Italia S.R.L., 12045 Fossano (CN) (IT)
(72) Inventor: Gemesio, Matteo, 12045 Fossano (CN) (IT)
(74) Representative: Garavelli, Paolo

(57) **Abstract**

A semirigid carrier rack is described, comprising at least one semirigid containing base (10) composed of at least two rigid lateral longitudinal containing flanks (11) mutually joined through flexible connecting members, each rigid lateral longitudinal containing flank (11) being equipped with fastening means to a vehicle roof, or to multi-use bars or to a carrier; and at least one external housing (20) made of flexible material, composed of a base (20a), a perimetral wall (20b) and an upper removable cover (21) adapted to contain therein the semirigid containing base (10).

## Description

The present invention refers to a un semirigid carrier rack for vehicle roof.

As known, on the market there have been now for many years rigid carrier racks to be applied to vehicle roofs, typically by interposing multi-usable or carrier bars, adapted to allow expanding the vehicle load capacity.

These existing carrier racks generally comprise a base and a cover, mutually cooperating for example through one or more hinges or other opening kinematisms, typically realised as two half-cases made of plastic material, whose shape is substantially aerodynamic, not to excessively impair the advancement of the vehicle on which they are applied.

These carrier racks, however, taking into account their shape and their big sizes, has the inconvenience of being particularly encumbrant and of being difficult to store when they are not used, and then removed from the vehicle, above all if they must be kept in a garage, a vehicle box or the like, characterised by limited spaces.

Moreover, rigid carrier racks cannot be transported inside the vehicle, for example in the baggage compartment, to be actually used in case of need, and therefore they are ill suited for unforeseen needs of supplementary space that can occur: in fact, such carrier racks must be assembled on the vehicle already foreseeing their use for transporting loads exceeding the vehicle capacity. In order to solve such inconvenience, it is common and daily experience that some users keep the carrier rack assembled on the vehicle even when it is not used, foreseeing possible future uses, providing however the vehicle with a doubtful aestietic appearance and clearly increasing fuel consumptions.

Therefore, object of the present invention is solving the above prior art problems by providing a semirigid carrier rack for vehicle roof that can be easily bent on itself when it is not used, in order to occupy a reduced storage space.

Moreover, an object of the present invention is providing a semirigid carrier rack that, once bent, can be contained inside the baggage compartment of any vehicle and then can be easily transported, to be then easily mounted on the vehicle roof in any case of supplementary load space needs.

The above and other objects and advantages of the invention, as will appear from the following description, are reached with a semirigid carrier rack for vehicle roof as described in claim 1. Preferred embodiments and non-trivial variations of the present invention are the subject matter of the dependent claims.

The present invention will be better described by some preferred embodiments thereof, provided as a non-limiting example, with reference to the enclosed drawings, in which:
- FIG. 1 shows a top perspective view of the semirigid carrier rack according to the present invention during its step of assembling on a vehicle roof;
- FIG. 2a shows a top perspective view of the semirigid carrier rack according to the present invention during another step of its assembling on a vehicle roof;
- FIG. 2b shows an enlargement of the part in box A in FIG. 2a;
- FIG. 3 shows a top perspective view of the semirigid carrier rack according to the present invention during a further assembling step thereof on a vehicle roof;
- FIG. 4a shows an exploded view of a fastening device of the semirigid carrier rack according to the present invention on a vehicle roof;
- FIG. 4b shows an assembled view of the fastening device of FIG. 4a;
- FIG. 5 to 7 show perspective views of the semirigid carrier rack according to the present invention during other assembling steps thereof on a vehicle roof;
- FIG. 8 to 11 show perspective views of a part of the semirigid carrier rack according to the present invention;
- FIG. 12 shows a top perspective view of a preferred variation of the semirigid carrier rack according to the present invention;
- FIG. 13 shows two perspective views, respectively from the top and bottom, of an element of the semirigid carrier rack of FIG. 12;
- FIG. 14 shows a bottom perspective view of the semirigid carrier rack of FIG. 12;
- FIG. 15 shows a bottom perspective view of the semirigid carrier rack of FIG. 12 in an assembling step thereof on a vehicle roof; and
- FIG. 16 shows a top perspective view of the semirigid carrier rack of FIG. 12 in another assembing step thereof on a vehicle roof.

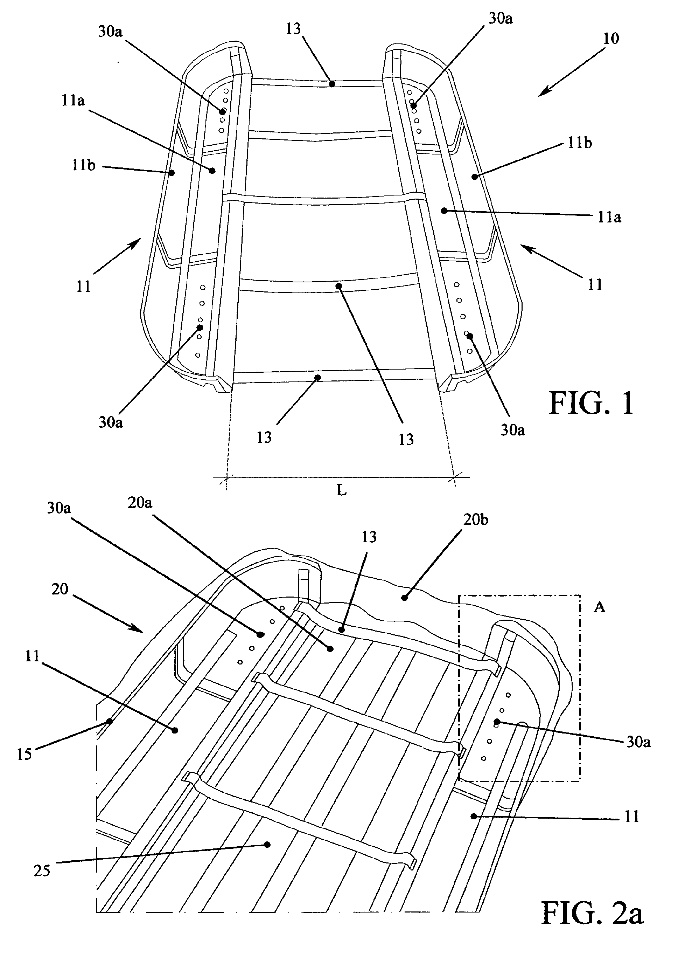

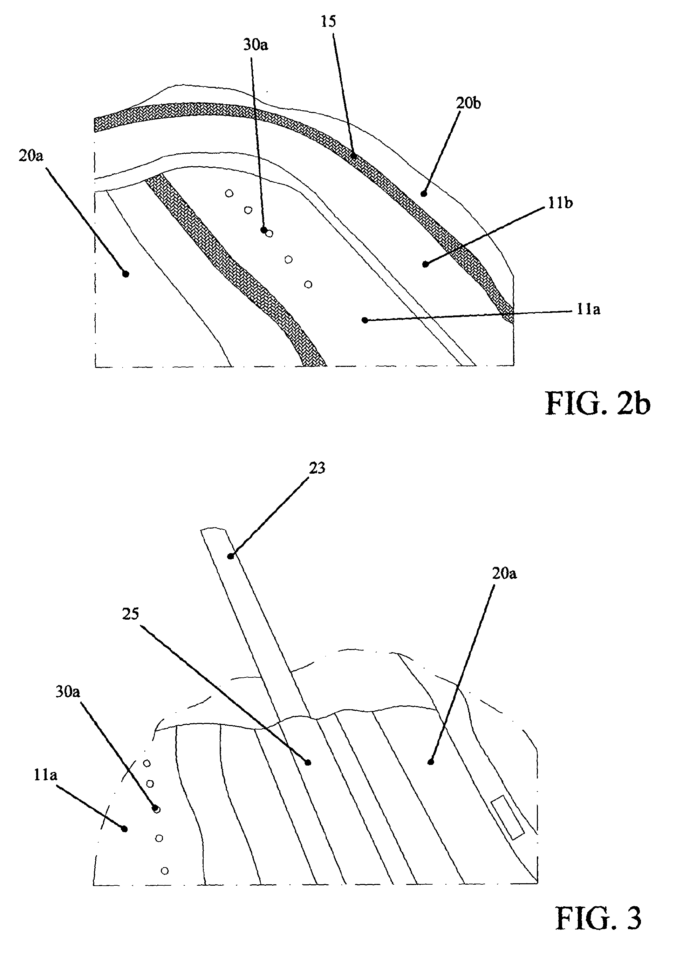

With reference to the Figures, it is possible to note that the semirigid carrier rack according to the present invention comprises:
- at least one semirigid containing base 10, composed of at least two rigid lateral longitudinal containing flanks 11, mutually joined through flexible connecting members, preferably realised as at least two transverse flexible bands 13 made of plastic material or fabric (as an example, FIG. 1 shows a semirigid containing base 10 in which the two rigid lateral longitudinal containing flanks 11 are mutually joined through five flexible bands 13); each lateral longitudinal containing flank 11 is preferably made of plastic material or composite and shaped in order to be defined by a una lower base 11a joined to a side wall llb: the side walls 11b of the respective rigid lateral longitudinal containing flanks 11 then define rigid lateral and perimetral walls for containing the semirigid carrier rack according to the present invention; obviously, the length of the flexible connecting members 13, depending on which the maximum distance L is established between rigid lateral longitudinal containing flanks 11, is a variable parameter that can depend on the capacity that has to be conferred to the semirigid carrier rack according to the present invention and/or the sizes of the roof on which the carrier rack itself must be assembled. Each rigid lateral longitudinal containing flank 11 is further equipped with fastening means to the vehicle roof, or multi-use or carrier bars assembled on the vehicle roof itself;
- at least one external housing 20 made of flexible material composed of a base 20a, of a perimetral wall 20b and of an upper removable cover 21, such external housing 20 being adapted to contain inside the semirigid containing base 10, being in particular the lower bases 11a of the rigid lateral longitudinal containing flanks 11 in abutment on the base 20a of the external housing 20, as well as the side walls 11b, externally covered by the perimetral wall 20b. In particular, the adherence between side walls 11b and perimetral wall 20b can be increased by interposing between them, for example, at least one Velcro^{(R)} band 15 or clips (not shown). The base 20a of the external housing 20 can be equipped with reinforcement means, preferably realised as at least one reinforcement longitudinal listel 23 inserted in a related suitable longitudinal pocket 25 obtained along the base 20a, as shown, for example, in FIG. 3; alternatively, it is clear that the reinforcement longitudinal listel 23 can be made integral with the base 20a through gluing, sewing and/or welding. Obviously, thg external housing 20 can be realised with a wide variety of flexible materials (such as for example plastic materials or fabrics) that provide it, in particular, with suitable resistance and water-tightness characteristics.

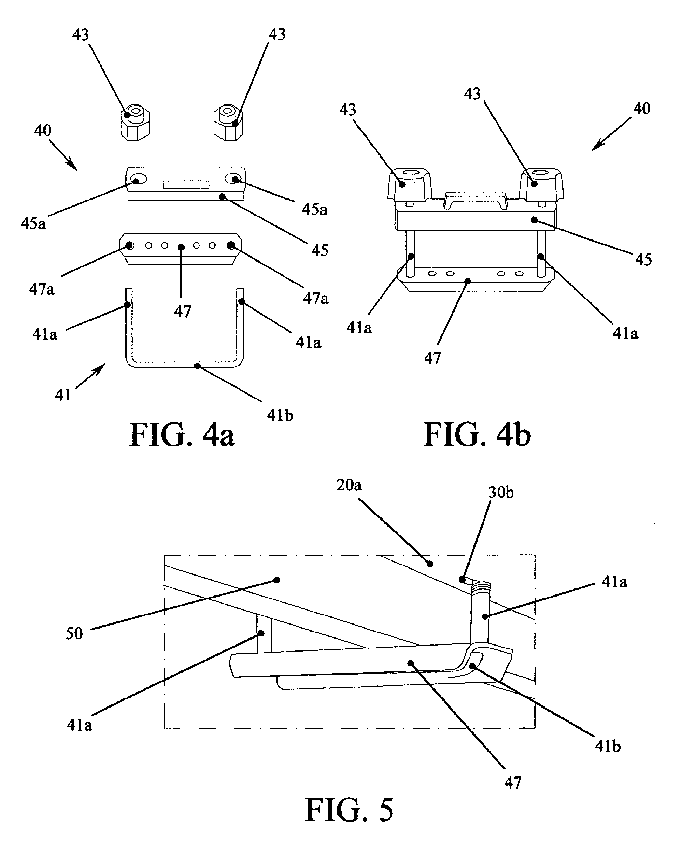

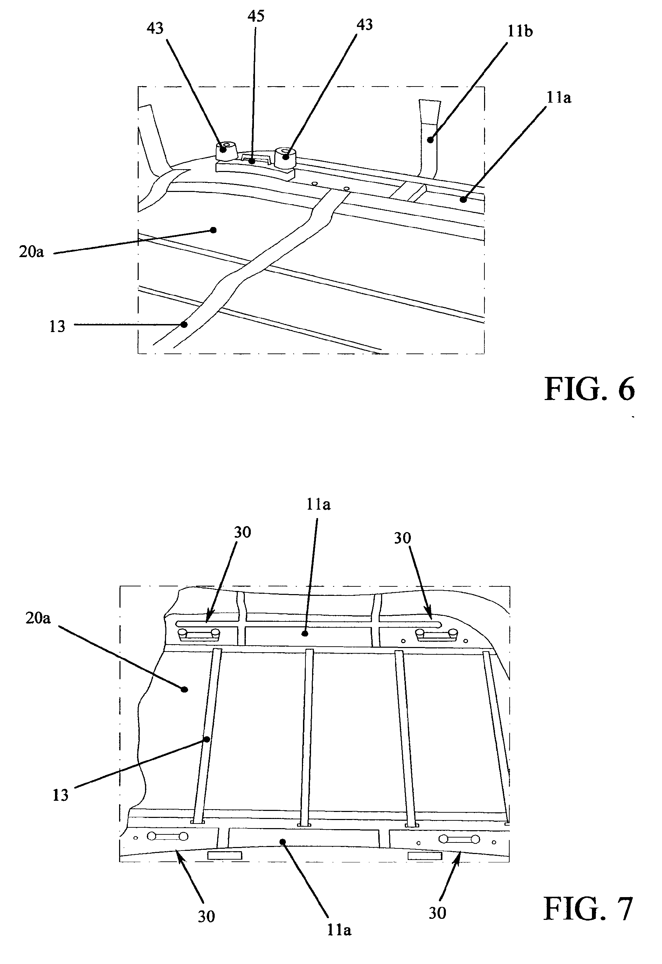

Though the semirigid carrier rack according to the present invention can be directly secured to the vehicle roof realising, for example, the carrier rack fastening means in such a way as to be interfaced with the four seats or arrangements aimed to fasten the multi-use bar feet with which veicle roofs are currently equipped already when manufacturing them, the most usual use of the semirigid carrier rack according to the present invention, as well as that of rigid carrer racks of the prior art, provides that it is placed on the vehicle roof by fastening it on a carrier or multi-use bars with which the vehicle is already equipped. For such purpose, therefore, merely as an example, the fastening means of the carrier rack according to the present invention will be described and shown herein below in some variations thereof adapted to allow fastening the carrier rack on multi-use bars or on a vehicle carrier. In such context, it is wholly evident that, due to safety, reliability and stability issues, the semirigid carrier rack according to the present invention must be fastened in many fastening points to the multi-use bars or the carrier: in particular, also due to fastening simmetry issues, it is preferable that the fastening means of the semirigid carrier rack are made in such a way as to allow at least four fastening points 30. Since the four fastening points 30 are substantially mutually equal, due to briefness and descriptive efficiency issues, in particular a single fastening point 30 will be described herein below, deeming also the remaining ones also described by analogy. Then, with reference to Figures 2b to 11, it is possible to note that in a first preferred embodiment of the semirigid carrier rack according to the present invention, in each fastening point 30, the fastening means comprise at least two first fastening through slits 30a longitudinally arranged along the lower base 11a of a rigid lateral longitudinal containing flank 11, preferably next to its two end longitudinal portions, each first slit 30a being juxtaposed to a similar second slit 30b obtained through the base 20a of the external housing 20, and a fastening device 40 (as shown, for example, in FIG. 4a and 4b) cooperating with the first fastening through slits 30a and the second slits 30b in order to fasten the semirigid carrier rack according to the present invention to a bar 50 (as shown, for example, in FIG. 5) such as for example a multiuse bar or a bar belonging to a carrier). In particular, the fastening device 40 comprises at least one fastening U-bolt 41, obviously realised as an "U"-shaped bracket having each one of its two arms 41a adapted to be inserted in a respective second slit 30b and first slit 30a juxtaposed thereto once straddling the bar 50. In order to tighten the bar 50 against the base 20a of the external housing 20 and the lower base 11a of the respective rigid lateral longitudinal containing flank 11 (FIG. 5), each arm 41a is further equipped with at least one threaded portion thereof to allow screwing a respective fastening nut 43 adapted to abut against at least one fastening plate 45 equipped with two through-holes 45a for inserting at least the threaded portion of a respective arm 41a and arranged along the arms 41a between the fastening nuts 43 and the surface of the lower base 11a of the respective rigid lateral longitudinal containing flank 11 (FIG. 6). To allow a better assembling universality of the semirigid carrier rack according to the present invention, and in particular in order to suit to different possible center distances between the at least two (front and rear) multi-use bars of a vehicle or between the bars of a carrier, each fastening point 30 can be equipped with a plurality of pairs of first fastening through slits 30a (and related second slits 30b), preferably mutually longitudinally aligned and at the same distance. Moreover, in order to increase the pressure surface existing between the fastening U-bolt 41 and the bar 50, the fastening device 40 is further equipped with at least one abutment plate 47, also equipped with two through-holes 47a for inserting respective arms 41a, to be arranged between the intermediate portion 41b of the fastening U-bolt 41 and bar 50.

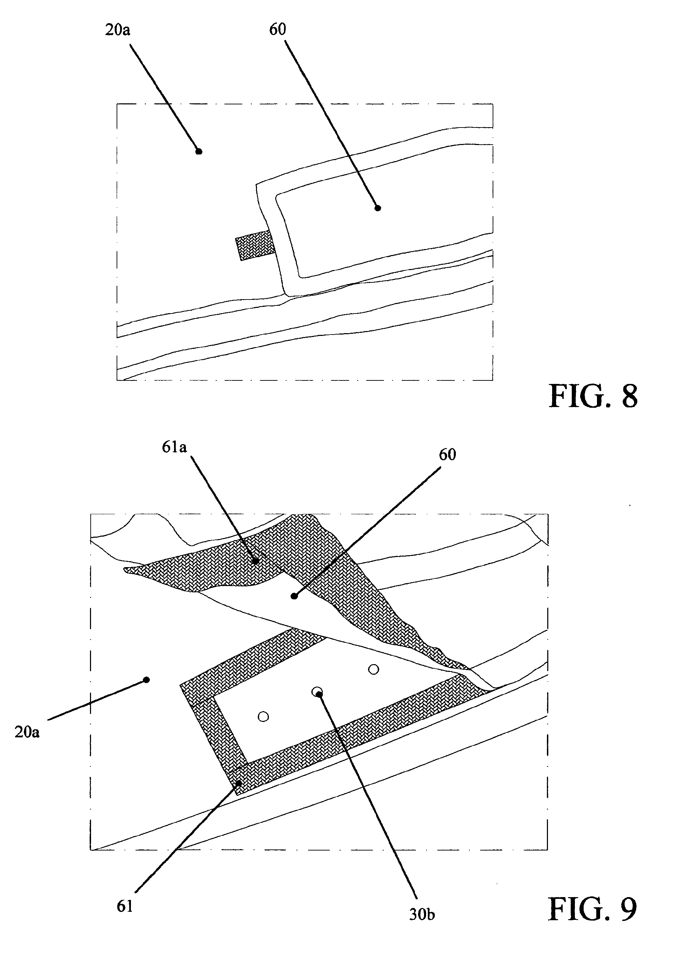

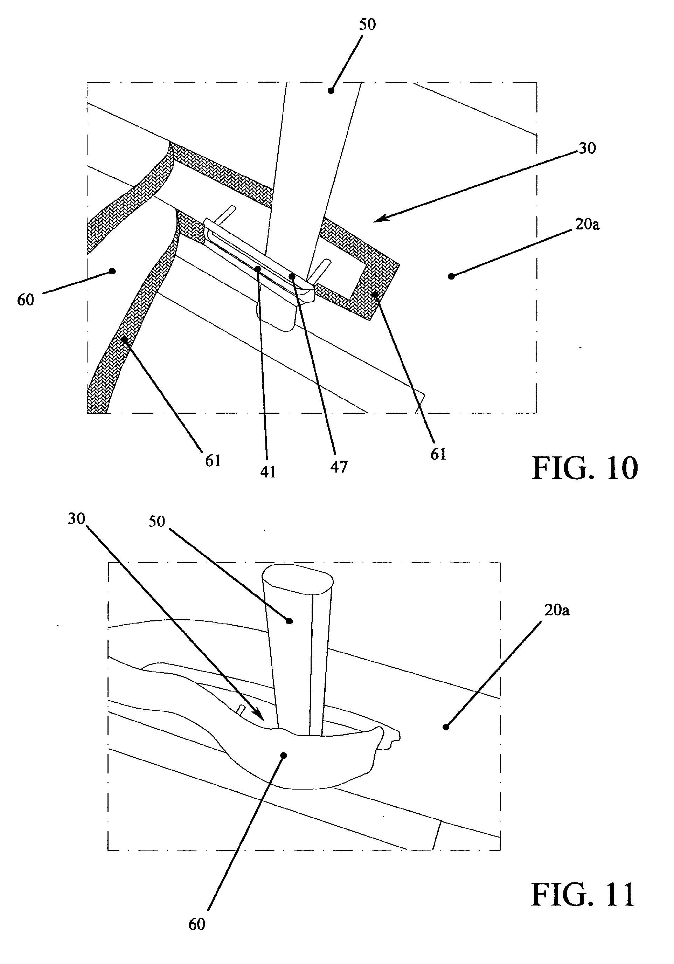

In a preferred variation of the external housing 20, its base 20a is externally equipped, next to each fastening point 30, with at least one covering band 60 (as shown, for example in FIG. 8, 9, 10 and 11) adhering to the base 20a through at least one perimetral Velcro^{(R)} band 61, adapted to cover and protect from atmospheric agents the respective fastening device 40 once installed in its related fastening point 30. In particular, the covering band 60 is extremely useful, also when assembling and disassembling the semirigid carrier rack according to the present invention, because once the arms 41a of the fastening U-bolt 41 are inserted in their reespective slits 30a, 30b, and the covering band 60 is closed through the Velcro^{(R)} band 61, as shown in particular in FIG. 11, it is possible to proceed with inserting the fastening plate 45 and the related fastening nuts 43, or to remove them, without having to keep with one hand, usually in uncomfortable positions, the fastening U-bolt 41 to prevent it from falling.

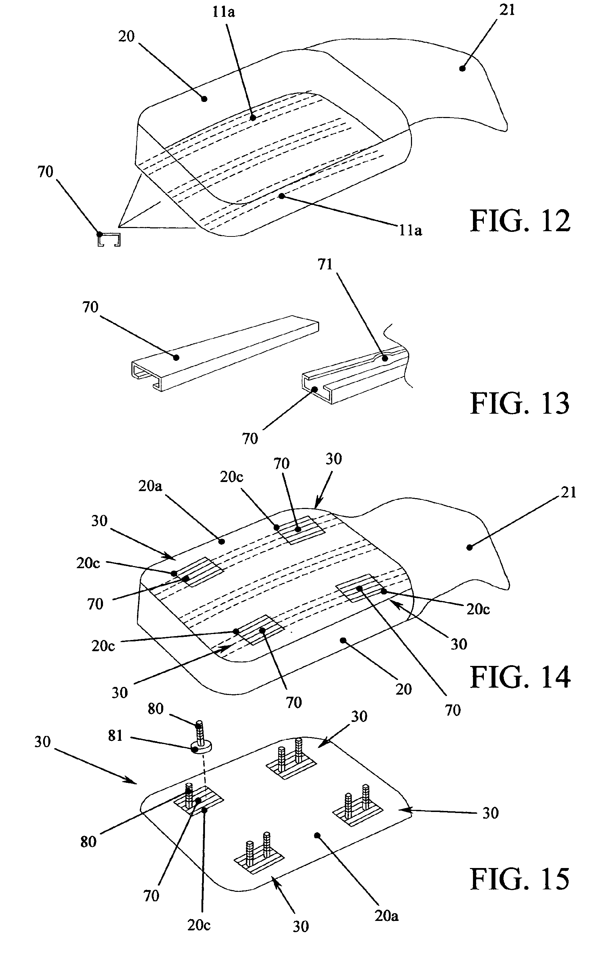

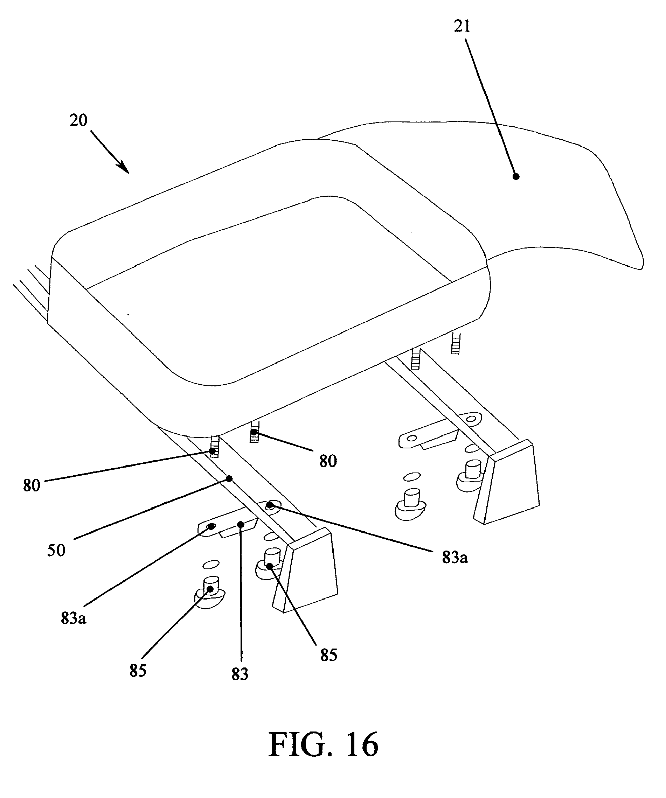

With reference now to Figures 12 to 16, it is possible to note an alternative embodiment of the fastening means of the semirigid carrier rack according to the present invention. In this variation, the fastening means comprise at least two rails 70, each one of which is longitudinally arranged below the lower base 11a of each rigid lateral longitudinal containing flank 11. Next to each fastening point 30 of the carrier rack according to the present invention, each rail 70 is equipped with at least one slit 71 having such a diameter as to allow inserting at least one head 81 of a fastening bolt 80, the remaining width of the rail 70 slit being less than the diameter of the head 81 but equal to or greater than the diameter of the fastening bolt 80 stem.

In order to allow inserting the head 81 of the fastening bolts 80 inside the rail 70, the base 20a of the external housing 20 is equipped with at least one opening 20c next to the slit 71. In particular, in every fastening point 30, the fastening means preferably comprise at least two fastening bolts 80 that, once inserted in the related rail 70, are arranged at the two opposite sides of a bar 50; in order to fasten the semirigid carrier rack according to the present invention in every fastening point 30 thereof to a respective bar 50, the fastening means then comprise at least one U-bolt plate 83, equipped with two through-holes 83a for inserting a respective stem of a fastening bolt 80, to be arranged straddling the bar 50, and two fastening nuts 85 to be screwed to the respective fastening bolt 80 once having inserted the U-bolt plate 83 along the related pair of fastening bolts 80. Also in this variation, it is clear that it can be extremely useful to have the covering band 60 present next to the fastening points 30, as previously described.

## Claims

1. Semirigid carrier rack, **characterised in that** it comprises:
- at least one semirigid containing base (10) composed of at least two rigid lateral longitudinal containing flanks (11) mutually joined through flexible connecting members, each one of said rigid lateral longitudinal containing flanks (11) being equipped with fastening means to a vehicle roof, or tomulti-use bars or to a carrier;
- at least one external housing (20), made of flexible material, composed of a base (20a), of a perimetral wall (20b) and of an upper removable cover (21), said external housing (20) being adapted to contain therein said semirigid containing base (10).

2. Semirigid carrier rack according to claim 1, **characterised in that** said flexible connecting members are at least two flexible transverse bands (13).

3. Semirigid carrier rack according to claim 1, **characterised in that** said lateral longitudinal containing flank (11) is shaped to be defined by a lower base (11a) joined to a side wall (11b).

4. Semirigid carrier rack according to claim 1, **characterised in that** said lower bases (11a) of said rigid lateral longitudinal containing flanks (11) are in abutment onto said base (20a) and said side walls (11b) are externally covered by said perimetral wall (20b).

5. Semirigid carrier rack according to claim 4, **characterised in that** said side walls (11b) adhere to said perimetral wall (20b) by interposing at least one Velcro^{(R)} band (15).

6. Semirigid carrier rack according to any one of the previous claims, **characterised in that** said base (20a) of said external housing (20) is equipped with reinforcement means.

7. Semirigid carrier rack according to claim 6, **characterised in that** said reinforcement means are at least one reinforcement longitudinal listel (23).

8. Semirigid carrier rack according to claim 7, **characterised in that** said base (20a) is equipped with a longitudinal pocket (25) for inserting said reinforcement longitudinal listel (23).

9. Semirigid carrier rack according to claim 1, **characterised in that** in each fastening point (30) of said carrier rack to multi-use bars o to a carrier, said fastening means comprise at least two first fastening through slits (30a) longitudinally arranged along said lower base (11a) of said rigid lateral longitudinal containing flank (11), each one of said first slits (30a) being juxtaposed to a second slit (30b) crossing said base (20a), and a fastening device (40) cooperating with said first slits (30a) and said second slits (30b) to fasten said semirigid carrier rack to a bar (50).

10. Semirigid carrier rack according to claim 9, **characterised in that** said fastening device (40) comprises at least one "U"-shaped fastening U-bolt (41) having each one of its two arms (41a) adapted to be inserted in one of said second slits (30b) and said first slit (30a) juxtaposed thereto, once straddling said bar (50), each one of said arms (41a) being equipped with at least one threaded portion thereof for screwing a fastening nut (43) adapted to operate in abutment against at least one fastening plate (45) equipped with two through-holes (45a) for inserting at least said threaded portion of a respective arm (41a) and arranged along said arms (41a) between said fastening nuts (43) and said lower base (11a) of said respective rigid lateral longitudinal containing flank (11).

11. Semirigid carrier rack according to claim 10, **characterised in that** said fastening device (40) is equipped with at least one abutment plate (47) equipped with two through-holes (47a) for inserting said arms (41a) arranged between an intermediate portion (41b) of said fastening U-bolt (41) and said bar (50).

12. Semirigid carrier rack according to any one of the previous claims, **characterised in that** said external housing (20) is externally equipped, next to each one of said fastening points (30), with at least one covering band (60) adhering to said base (20a) through at least one perimetral Velcro^{(R)} band (61).

13. Semirigid carrier rack according to claim 1, **characterised in that** said fastening means comprise at least two rails (70), each one of which is longitudinally arranged below said lower base (11a) of each one of said rigid lateral longitudinal containing flanks (11).

14. Semirigid carrier rack according to claim 13, **characterised in that**, in each one of said fastening points (30), each one of said rails (70) is equipped with at least one slit (71) for inserting at least one head (81) of a fastening bolt (80) through at least one opening (20c) of said base (20a) next to said slit (71).

15. Semirigid carrier rack according to claim 14, **characterised in that**, in each one of said fastening points (30), said fastening means comprise at least two of said fastening bolts (80) fastened straddling said bar (50) through at least one U-bolt plate (83) equipped with two through-holes (83a) for inserting a respective one of said fastening bolts (80), and with two fastening nuts (85).
